# EUROPÄISCHE PATENTANMELDUNG

(11) **EP 3 501 343 A1**
(43) Veröffentlichungstag der Anmeldung: **26.06.2019**
(21) Anmeldenummer: 17208694.4
(22) Anmeldetag: 19.12.2017
(51) Int. Cl.: A47J 27/21, A47J 31/00

(54) **SYSTEM ZUM ZUBEREITEN VON TEE**

(71) Anmelder: Karakaya, Erol, 10823 Berlin (DE)
(72) Erfinder: Karakaya, Erol, 10823 Berlin (DE)
(74) Vertreter: Schulz Junghans Patentanwälte PartGmbB

(57) **Zusammenfassung**

Die Erfindung betrifft ein System (1) zum Zubereiten von Tee, insbesondere einen Teekocher, aufweisend einen ersten Behälter (10) zur Aufnahme einer ersten Flüssigkeit, wobei der erste Behälter (10) eine erste Öffnung (11) zum Einfüllen der ersten Flüssigkeit aufweist, und einen zweiten Behälter (20) zur Aufnahme einer zweiten Flüssigkeit, wobei der zweite Behälter (20) eine zweite Öffnung (21) zum Einfüllen der zweiten Flüssigkeit und ein der zweiten Öffnung (21) gegenüberliegendes unteres Ende (22) aufweist, wobei der erste Behälter (10) und der zweite Behälter (20) derart entlang einer gemeinsamen Längsachse (L) positionierbar sind, dass das untere Ende (22) des zweiten Behälters (20) die erste Öffnung (11) des ersten Behälters (10) verschließt, und wobei das System (1) wenigstens ein Verbindungselement (2) aufweist, das dazu ausgebildet ist, zwischen dem ersten Behälter (10) und dem zweiten Behälter (20) eine entlang der Längsachse (L) beidseitig formschlüssige Verbindung auszubilden.

## Beschreibung

Die Erfindung betrifft ein System zum Zubereiten von Tee, insbesondere einen Teekocher mit zwei Behältern bzw. Kannen.

Nach dem Stand der Technik sind Teekocher (z.B. traditionelle türkische Teekocher, auch als Ceydanlik bezeichnet) bekannt, die aus einem ersten Behälter zum Kochen von Wasser (auch als Wasserkanne bezeichnet) und einem zweiten Behälter zum Zubereiten eines Teekonzentrats (auch als Teekanne bezeichnet) bestehen. Insbesondere zum Servieren kann der zweite Behälter auf dem ersten Behälter angeordnet werden. Das Teekonzentrat wird dann aus dem zweiten Behälter z.B. in Teegläser eingeschenkt und mit heißem Wasser aus dem ersten Behälter verdünnt.

Neben dem Teeaufguss werden solche Teekocher auch für die Zubereitung von Kräutertees und zum Wasserkochen verwendet, z.B. im Haushalt, in Kaffeehäusern, Teehäusern, Restaurants und in ähnlichen Lebensbereichen. Nach dem Servieren werden die Teekocher im Allgemeinen auf Tischen, Beistelltischen, Arbeitsflächen, Herden etc. bis zum nächsten Serviervorgang bereitgestellt.

Während des Tragens, der Bedienung und der Bereitstellung der Teekocher können sich aufgrund der in den Behältern enthaltenen heißen Flüssigkeiten (z.B. Tee, Kräutertee, heißes Wasser) leicht Unfälle ereignen.

Z.B. können heiße Flüssigkeiten, die durch Wackeln oder Herunterfallen der Behälter, durch Herunterfallen von Deckeln oder durch Umkippen während des Tragens beim Servieren oder während der Wartephase beim Zubereiten des Tees aus den Behältern austreten, bei den Bedienern und den in unmittelbarer Nähe befindlichen Personen ernsthafte Verletzungen wie Verbrennungen bzw. Verbrühungen verursachen.

Zur Vermeidung solcher Unfälle sind nach dem Stand der Technik z.B. Deckel mit punktförmigen Vorsprüngen bekannt, die eine bessere Haftung der Deckel an den Behältern (Teekanne und Wasserkanne) bewirken. Dies sorgt allerdings nicht für einen vollständigen Verschluss der Behälter.

Weitere Lösungen für eine Befestigung des jeweiligen Deckels an der Teekanne oder Wasserkanne sind in den türkischen Gebrauchsmusterschriften 2004/01698, 2007/00712, 2010/05027 und 2012/07526 beschrieben.

Außerdem beschreibt die türkische Gebrauchsmusterschrift 2007/07171 eine Teekanne mit einem versteckten verlängerten Boden, der das Umkippen der Teekanne erschwert. Jedoch wird das Umkippen des oberen Behälters nicht gänzlich verhindert und es sind weiterhin Verbrühungsunfälle durch ein Auslaufen von heißer Flüssigkeit möglich. Zudem vergrößert der verlängerte Boden die Maße und das Gewicht der Teekanne, was sich nachteilig auf die Benutzung und die Produktionskosten auswirkt.

Die türkische Gebrauchsmusterschrift 2007/08391 beschreibt einen Teekocher mit einem Schienensystem zum Verbinden des inneren Deckels der Wasserkanne mit einem vertieften Boden der Teekanne. Auch hier ist weiterhin ein Auslaufen heißer Flüssigkeiten möglich. Außerdem hat das beschriebene System den Nachteil, dass ein innerer Deckel der Wasserkanne vorhanden sein muss.

Daher ist es die Aufgabe der vorliegenden Erfindung, ein System zum Zubereiten von Tee zur Verfügung zu stellen, welches bezüglich der genannten Nachteile des Standes der Technik verbessert ist.

Diese Aufgabe wird durch das System gemäß dem unabhängigen Anspruch 1 gelöst. Vorteilhafte Ausführungsformen des Systems sind in den Unteransprüchen 2 bis 15 genannt und werden im Folgenden beschrieben.

Die Erfindung betrifft ein System zum Zubereiten von Tee (auch als Teekocher bezeichnet) aufweisend einen ersten Behälter zur Aufnahme einer ersten Flüssigkeit, insbesondere Wasser, wobei der erste Behälter eine erste Öffnung zum Einfüllen der ersten Flüssigkeit aufweist, und einen zweiten Behälter zur Aufnahme einer zweiten Flüssigkeit, insbesondere Teekonzentrat, wobei der zweite Behälter eine zweite Öffnung zum Einfüllen der zweiten Flüssigkeit und ein der zweiten Öffnung gegenüberliegendes unteres Ende aufweist, wobei der erste Behälter und der zweite Behälter derart entlang einer gemeinsamen Längsachse positionierbar sind, dass das untere Ende des zweiten Behälters die erste Öffnung des ersten Behälters verschließt, wobei das System, insbesondere der erste Behälter und/oder der zweite Behälter wenigstens ein Verbindungselement aufweist bzw. aufweisen, das dazu ausgebildet ist, zwischen dem ersten Behälter und dem zweiten Behälter eine entlang der Längsachse beidseitig formschlüssige Verbindung auszubilden.

Insbesondere handelt es sich bei dem System um einen traditionellen türkischen Teekocher, auch als Ceydanlik bezeichnet. Der erste Behälter wird im Rahmen der vorliegenden Spezifikation auch als Wasserkanne bezeichnet und der zweite Behälter wird auch als Teekanne bezeichnet.

Das System weist einen zusammengesetzten Zustand auf, in dem der zweite Behälter auf dem ersten Behälter platziert und mit diesem formschlüssig verbunden ist. In diesem zusammengesetzten Zustand kann der Teekocher insbesondere auf einfache Weise serviert werden. Die formschlüssige Verbindung ist dabei derart ausgeführt, dass der erste und zweite Behälter wieder voneinander getrennt werden können.

Mit einer ,in Richtung der Längsachse beidseitig formschlüssigen Verbindung' zwischen dem ersten Behälter und dem zweiten Behälter ist gemeint, dass eine axiale Bewegung (also eine Bewegung parallel zu der Längsachse) des zweiten Behälters relativ zu dem ersten Behälter sowohl in der Richtung zu dem ersten Behälter hin als auch in der Richtung von dem ersten Behälter weg aufgrund des Formschlusses gehindert ist.

Dadurch bleiben der erste Behälter und der zweite Behälter insbesondere selbst dann miteinander verbunden, wenn der Teekocher kopfüber, also mit dem zweiten Behälter bzw. der Teekanne nach unten, aufgestellt wird.

Die besagte formschlüssige Verbindung ist insbesondere eine feste Verbindung. Weiterhin handelt es sich insbesondere um eine lösbare mechanische Verbindung.

Insbesondere ist der erste Behälter mit dem zweiten Behälter derart formschlüssig verbindbar bzw. verbunden, dass die erste Öffnung gegen einen Austritt der ersten Flüssigkeit aus der ersten Öffnung im Wesentlichen abgedichtet, insbesondere vollständig abgedichtet, ist.

Bei dem Verbindungselement kann es sich insbesondere um einen Vorsprung, vorzugsweise einen Stift, zum Ausbilden einer Steckverbindung bzw. Steck-Drehverbindung oder ein Schraubgewinde zum Ausbilden einer Schraubverbindung handeln.

Gemäß einer Ausführungsform weist der erste Behälter das Verbindungselement auf. Gemäß einer weiteren Ausführungsform weist der zweite Behälter das Verbindungselement auf. Weiterhin kann sowohl der erste Behälter als auch der zweite Behälter jeweils ein Verbindungselement aufweisen. Ebenso kann das Verbindungselement als separate Komponente des erfindungsgemäßen Systems vorgesehen sein.

Durch die erfindungsgemäße Verbindung zwischen dem ersten Behälter und dem zweiten Behälter ist vorteilhafterweise die Gefahr des Umkippens des ersten und zweiten Behälters und des Verschüttens heißer Flüssigkeiten im Vergleich zu Teekochern des Standes der Technik deutlich reduziert. Dadurch können Unfälle bei der Bedienung des Teekochers bzw. beim Servieren von Tee mittels des Teekochers weitgehend verhindert werden.

Das untere Ende des zweiten Behälters ist insbesondere durch einen Boden des zweiten Behälters gebildet.

Insbesondere verschließt das untere Ende des zweiten Behälters die erste Öffnung des ersten Behälters derart, dass keine Flüssigkeit aus der ersten Öffnung austreten kann.

Insbesondere ist durch das Verschließen der ersten Öffnung der Innenraum des ersten Behälters von dem Innenraum des zweiten Behälters strömungstechnisch getrennt.

Dadurch dass das untere Ende des zweiten Behälters zum Verschließen der ersten Öffnung des ersten Behälters genutzt wird, ist vorteilhafterweise kein separater Verschluss des ersten Behälters notwendig, wenn der zweite Behälter z.B. beim Servieren auf dem ersten Behälter positioniert wird.

Die erste Öffnung des ersten Behälters und/oder die zweite Öffnung des zweiten Behälters ist bzw. sind insbesondere entlang einer zu der Längsachse senkrechten Ebene erstreckt.

Das untere Ende des zweiten Behälters ist insbesondere im Wesentlichen entlang einer Ebene erstreckt, das heißt im Wesentlichen flach ausgebildet, so dass der zweite Behälter z.B. derart auf einer Herdplatte platzierbar ist, dass im Wesentlichen das gesamte untere Ende in wärmeleitendem Kontakt mit der Herdplatte steht.

Gemäß einer weiteren Ausführungsform ist die Verbindung zwischen dem ersten Behälter und dem zweiten Behälter auch senkrecht zu der Längsachse formschlüssig. Das heißt eine radiale Bewegung (also eine Bewegung senkrecht zu der Längsachse), insbesondere eine radiale Bewegung in jede Richtung, des zweiten Behälters relativ zu dem ersten Behälter ist aufgrund des Formschlusses gehindert.

Gemäß einer weiteren Ausführungsform ist das untere Ende des zweiten Behälters vollständig geschlossen, weist also keine Öffnungen auf.

Gemäß einer Ausführungsform ist das untere Ende des zweiten Behälters in die erste Öffnung des ersten Behälters einsetzbar, so dass die erste Öffnung verschlossen ist.

Dabei ist die erste Öffnung insbesondere gegen einen Austritt der ersten Flüssigkeit aus der ersten Öffnung im Wesentlichen abgedichtet, insbesondere vollständig abgedichtet.

Gemäß einer weiteren Ausführungsform ist die erste Öffnung von einer umlaufenden Wandung des ersten Behälters begrenzt, wobei der zweite Behälter eine, insbesondere an das untere Ende angrenzende, umlaufende Außenfläche aufweist, die derart in die erste Öffnung einsetzbar ist, dass die Außenfläche formschlüssig an der Wandung des ersten Behälters anliegt.

Hierdurch lässt sich auf besonders einfache Weise eine Abdichtung des ersten Behälters realisieren.

Gemäß einer weiteren Ausführungsform weist der zweite Behälter einen Behälterabschnitt zum Aufnehmen der zweiten Flüssigkeit und einen entlang der Längsachse an den Behälterabschnitt angrenzenden Verbindungsabschnitt zum Verbinden mit dem ersten Behälter auf, wobei der Verbindungsabschnitt das untere Ende des zweiten Behälters bildet.

Gemäß einer weiteren Ausführungsform weist das untere Ende im Querschnitt bezüglich der Längsachse eine Kreisform bzw. Kreisabschnittsform, insbesondere mit wenigstens einer Abflachung, auf. Mit anderen Worten, das untere Ende ist zumindest abschnittsweise ringförmig. Mit einer Kreisabschnittsform ist dabei eine Form gemeint, die teilweise kreisförmig ist. Zusätzlich kann der Umfang bei einer Kreisabschnittsform z.B. entlang einer Linie verlaufende Abschnitte (auch als Abflachung bezeichnet) aufweisen.

An einer Kreisform oder Kreisabschnittsform lassen sich vorteilhafterweise Verbindungselemente an beliebiger Stelle positionieren. Diese Verbindungselemente können z.B. so ausgelegt werden, dass durch eine Drehbewegung zwischen dem ersten Behälter und dem zweiten Behälter die formschlüssige Verbindung zwischen dem ersten und dem zweiten Behälter hergestellt wird.

Eine Abflachung hat den Vorteil, dass z.B. in die Abflachung auf besonders einfache Weise Bohrungen zum Einsetzen eines Verbindungselements eingebracht werden können.

Gemäß einer Ausführungsform liegt dabei die Außenfläche im Wesentlichen dichtend, insbesondere vollständig dichtend, an der Wandung an, so dass die erste Öffnung gegen einen Austritt der ersten Flüssigkeit aus der ersten Öffnung im Wesentlichen abgedichtet ist, insbesondere vollständig abgedichtet ist.

Gemäß einer weiteren Ausführungsform ist das wenigstens eine Verbindungselement durch einen Vorsprung, insbesondere einen Stift, des ersten Behälters gebildet, wobei der zweite Behälter wenigstens einen Einschnitt, insbesondere wenigstens eine Bohrung, aufweist, und wobei zum Ausbilden der formschlüssigen Verbindung zwischen dem ersten Behälter und dem zweiten Behälter ein jeweiliger Vorsprung des ersten Behälters in einen entsprechenden Einschnitt des zweiten Behälters einsetzbar ist.

Gemäß einer weiteren Ausführungsform ist das wenigstens eine Verbindungselement durch einen Vorsprung, insbesondere einen Stift, des zweiten Behälters gebildet, wobei der erste Behälter wenigstens einen Einschnitt, insbesondere wenigstens eine Bohrung, aufweist, und wobei zum Ausbilden der formschlüssigen Verbindung zwischen dem ersten Behälter und dem zweiten Behälter ein jeweiliger Vorsprung des zweiten Behälters in einen entsprechenden Einschnitt des ersten Behälters einsetzbar ist.

Durch ein solches System aus Vorsprüngen und Einschnitten lassen sich der erste Behälter und der zweite Behälter auf einfache Weise formschlüssig miteinander verbinden und insbesondere horizontal und vertikal fixieren, das heißt es wird sowohl ein axial beidseitiger Formschluss als auch ein radialer Formschluss erreicht. So kann das System aus erstem und zweitem Behälter z.B. beim Servieren auf einfache Weise getragen werden, ohne dass die Gefahr des Umkippens und Auslaufens des zweiten Behälters besteht.

Gemäß einer weiteren Ausführungsform ist der wenigstens eine Vorsprung oder der wenigstens eine Einschnitt an dem Verbindungsabschnitt angeordnet.

Gemäß einer weiteren Ausführungsform ist der wenigstens eine Vorsprung in einer radialen Richtung bezüglich der Längsachse, das heißt senkrecht zu der Längsachse, erstreckt, wobei der wenigstens eine Einschnitt einen in einer axialen Richtung bezüglich der Längsachse, das heißt parallel zu der Längsachse, verlaufenden ersten Abschnitt und einen in einer tangentialen Richtung bezüglich der Längsachse, das heißt senkrecht zu der Längsachse und senkrecht zu der radialen Richtung bzw. dem Vorsprung, verlaufenden zweiten Abschnitt aufweist, wobei ein jeweiliger Vorsprung mittels einer translatorischen Bewegung in bzw. entlang der axialen Richtung in den ersten Abschnitt eines entsprechenden Einschnitts einsetzbar ist, und wobei der jeweilige Vorsprung mittels einer Drehbewegung zwischen dem ersten Behälter und dem zweiten Behälter um die Längsachse in den zweiten Abschnitt des entsprechenden Einschnitts einsetzbar ist, so dass eine Steck-Dreh-Verbindung zwischen dem ersten Behälter und dem zweiten Behälter realisiert ist.

Eine solche Steck-Dreh-Verbindung wird auch als Bajonett-Verschluss bezeichnet. Auf diese Weise lässt sich die Verbindung zwischen erstem und zweitem Behälter auf einfache Weise herstellen und wieder lösen.

Gemäß einer weiteren Ausführungsform weist der Einschnitt weiterhin einen in der tangentialen Richtung bezüglich der Längsachse verlaufenden dritten Abschnitt auf, wobei der jeweilige Vorsprung mittels einer Drehbewegung zwischen dem ersten Behälter und dem zweiten Behälter in einer ersten Richtung um die Längsachse in den zweiten Abschnitt einsetzbar ist, und wobei der jeweilige Vorsprung mittels einer Drehbewegung zwischen dem ersten Behälter und dem zweiten Behälter in einer der ersten Richtung entgegengesetzten zweiten Richtung um die Längsachse in den dritten Abschnitt einsetzbar ist. Dabei verläuft der dritte Abschnitt insbesondere parallel zu dem zweiten Abschnitt.

Das heißt, der Einschnitt ist insbesondere T-förmig ausgebildet, wobei der erste Abschnitt das untere offene Ende des T-Profils bildet, und wobei der zweite und der dritte Abschnitt den oberen Teil des T-Profils bilden.

Dies hat den Vorteil, dass die Verbindung zwischen dem ersten und dem zweiten Behälter durch eine Drehbewegung in jede Richtung hergestellt werden kann, so dass eine komfortable Bedienung des erfindungsgemäßen Systems gleichermaßen für Linkshänder und Rechtshänder möglich ist.

Gemäß einer weiteren Ausführungsform ist der jeweilige Vorsprung in dem entsprechenden Einschnitt, insbesondere in dem zweiten Abschnitt und/oder in dem dritten Abschnitt des entsprechenden Einschnitts, verrastbar bzw. einrastbar. Dabei bedeutet 'verrastbar' insbesondere, dass ein Mechanismus vorgesehen ist, mittels dessen eine Bewegung des Vorsprungs in dem jeweiligen Einschnitt behindert ist.

Hierdurch wird die Verbindung zusätzlich gesichert, so dass das ungewollte Öffnen der Verbindung erschwert ist. Dies verringert die Unfallgefahr bei der Benutzung des Systems weiter.

Gemäß einer weiteren Ausführungsform weist der wenigstens eine Einschnitt einen in der axialen Richtung erstreckten vierten Abschnitt auf, wobei der vierte Abschnitt von dem zweiten Abschnitt oder dem dritten Abschnitt abzweigt, so dass der jeweilige Vorsprung zum Verrasten bzw. Einrasten des Vorsprungs von dem zweiten Abschnitt oder dem dritten Abschnitt in den vierten Abschnitt einsetzbar ist. Natürlich kann auch ein weiterer in axialer Richtung erstreckter fünfter Abschnitt des Einschnitts vorgesehen sein, wobei insbesondere der vierte Abschnitt von dem zweiten Abschnitt abzweigt, und wobei der fünfte Abschnitt von dem dritten Abschnitt abzweigt.

Durch das Einsetzen in den vierten bzw. fünften Abschnitt lässt sich die Verbindung auf einfache Weise gegen ungewolltes Öffnen sichern.

Selbstverständlich können auch andere Rastmechanismen zum Behindern der Bewegung des Vorsprungs in dem Einschnitt verwendet werden.

Gemäß einer weiteren Ausführungsform weist der erste Behälter eine erste Ausgussöffnung zum Ausgießen der ersten Flüssigkeit aus dem ersten Behälter auf, wobei das System einen ersten Verschluss aufweist, der dazu ausgebildet ist, die erste Ausgussöffnung zu verschließen.

Gemäß einer weiteren Ausführungsform ist der erste Verschluss dazu ausgebildet, die erste Ausgussöffnung gegen einen Austritt der ersten Flüssigkeit aus der ersten Ausgussöffnung im Wesentlichen dichtend, insbesondere vollständig dichtend, zu verschließen.

Gemäß einer weiteren Ausführungsform ist ein weiteres Verbindungselement zum Ausbilden einer entlang einer zu der ersten Ausgussöffnung senkrechten Achse beidseitig formschlüssigen Verbindung zwischen dem ersten Verschluss und dem ersten Behälter vorgesehen. Dabei ist die Verbindung insbesondere auch senkrecht zu der besagten Achse formschlüssig.

Gemäß einer weiteren Ausführungsform weist der erste Verschluss als Verbindungselement wenigstens einen Vorsprung, insbesondere einen Stift, auf und der erste Behälter weist, insbesondere an der ersten Ausgussöffnung, wenigstens einen Einschnitt, insbesondere eine Bohrung, auf, wobei zum Ausbilden der formschlüssigen Verbindung zwischen dem ersten Verschluss und dem ersten Behälter ein jeweiliger Vorsprung des ersten Verschlusses in einen entsprechenden Einschnitt des ersten Behälters einsetzbar ist.

Gemäß einer weiteren Ausführungsform weist der erste Verschluss wenigstens einen Einschnitt, insbesondere eine Bohrung, auf und der erste Behälter weist, insbesondere an der ersten Ausgussöffnung, als Verbindungselement wenigstens einen Vorsprung, insbesondere einen Stift, auf, wobei zum Ausbilden der formschlüssigen Verbindung zwischen dem ersten Verschluss und dem ersten Behälter ein jeweiliger Vorsprung des ersten Behälters in einen entsprechenden Einschnitt des ersten Verschlusses einsetzbar ist.

Gemäß einer weiteren Ausführungsform weist der zweite Behälter eine zweite Ausgussöffnung zum Ausgießen der zweiten Flüssigkeit aus dem zweiten Behälter auf, wobei das System einen zweiten Verschluss aufweist, der dazu ausgebildet ist, die zweite Ausgussöffnung zu verschließen.

Gemäß einer weiteren Ausführungsform ist der zweite Verschluss dazu ausgebildet, die zweite Ausgussöffnung gegen einen Austritt der zweiten Flüssigkeit aus der zweiten Ausgussöffnung im Wesentlichen dichtend, insbesondere vollständig dichtend, zu verschließen.

Gemäß einer weiteren Ausführungsform ist ein weiteres Verbindungselement zum Ausbilden einer entlang einer zu der zweiten Ausgussöffnung senkrechten Achse beidseitig formschlüssigen Verbindung zwischen dem zweiten Verschluss und dem zweiten Behälter vorgesehen. Dabei ist die Verbindung insbesondere auch senkrecht zu der besagten Achse formschlüssig.

Gemäß einer weiteren Ausführungsform weist der zweite Verschluss als Verbindungselement wenigstens einen Vorsprung, insbesondere einen Stift, auf und der zweite Behälter weist, insbesondere an der zweiten Ausgussöffnung, wenigstens einen Einschnitt, insbesondere eine Bohrung, auf, wobei zum Ausbilden der formschlüssigen Verbindung zwischen dem zweiten Verschluss und dem zweiten Behälter ein jeweiliger Vorsprung des zweiten Verschlusses in einen entsprechenden Einschnitt des zweiten Behälters einsetzbar ist.

Gemäß einer weiteren Ausführungsform weist der zweite Verschluss wenigstens einen Einschnitt, insbesondere eine Bohrung, auf und der zweite Behälter weist, insbesondere an der zweiten Ausgussöffnung, als Verbindungselement wenigstens einen Vorsprung, insbesondere einen Stift, auf, wobei zum Ausbilden der formschlüssigen Verbindung zwischen dem zweiten Verschluss und dem zweiten Behälter ein jeweiliger Vorsprung des zweiten Behälters in einen entsprechenden Einschnitt des zweiten Verschlusses einsetzbar ist.

Gemäß einer weiteren Ausführungsform weist das System weiterhin einen ersten Deckel zum Verschließen der ersten Öffnung des ersten Behälters auf. Dabei ist der erste Deckel insbesondere in dem Innenraum des ersten Behälters positionierbar, so dass die erste Öffnung verschlossen ist. Mit anderen Worten, es kann sich bei dem ersten Deckel um einen sogenannten Innendeckel handeln.

Gemäß einer weiteren Ausführungsform ist der erste Deckel dazu ausgebildet, die erste Öffnung gegen einen Austritt der ersten Flüssigkeit aus der ersten Öffnung im Wesentlichen dichtend, insbesondere vollständig dichtend, zu verschließen.

Gemäß einer weiteren Ausführungsform ist ein weiteres Verbindungselement zum Ausbilden einer entlang einer zu der ersten Öffnung senkrechten Achse beidseitig formschlüssigen Verbindung zwischen dem ersten Deckel und dem ersten Behälter vorgesehen. Dabei ist die Verbindung insbesondere auch senkrecht zu der besagten Achse formschlüssig.

Gemäß einer weiteren Ausführungsform weist der erste Deckel als Verbindungselement wenigstens einen Vorsprung, insbesondere einen Stift, auf und der erste Behälter weist, insbesondere an der ersten Öffnung, wenigstens einen Einschnitt, insbesondere eine Bohrung, auf, wobei zum Ausbilden der formschlüssigen Verbindung zwischen dem ersten Deckel und dem ersten Behälter ein jeweiliger Vorsprung des ersten Deckels in einen entsprechenden Einschnitt des ersten Behälters einsetzbar ist.

Gemäß einer weiteren Ausführungsform weist der erste Deckel wenigstens einen Einschnitt, insbesondere eine Bohrung, auf und der erste Behälter weist, insbesondere an der ersten Öffnung, als Verbindungselement wenigstens einen Vorsprung, insbesondere einen Stift, auf, wobei zum Ausbilden der formschlüssigen Verbindung zwischen dem ersten Deckel und dem ersten Behälter ein jeweiliger Vorsprung des ersten Behälters in einen entsprechenden Einschnitt des ersten Deckels einsetzbar ist.

Dabei ist insbesondere an der ersten Öffnung des ersten Behälters wenigstens ein Vorsprung, insbesondere ein Stift, vorgesehen, der dazu ausgebildet ist, in einen entsprechenden Einschnitt des ersten Deckels und in einen entsprechenden Einschnitt des unteren Endes des zweiten Behälters eingesetzt zu werden, so dass mittels des Vorsprungs zunächst der erste Deckel mit dem ersten Behälter verbindbar ist und anschließend der zweite Behälter mittels desselben Vorsprungs mit dem ersten Behälter, insbesondere formschlüssig, verbindbar ist. Hierfür muss der Vorsprung insbesondere eine ausreichende Länge aufweisen, um derart durch den entsprechenden Einschnitt des Deckels hindurch zu ragen, dass er in den entsprechenden Einschnitt des unteren Endes des zweiten Behälters einsetzbar ist.

Gemäß einer weiteren Ausführungsform weist das System weiterhin einen zweiten Deckel zum Verschließen der zweiten Öffnung auf.

Gemäß einer weiteren Ausführungsform ist der zweite Deckel dazu ausgebildet, die zweite Öffnung gegen einen Austritt der zweiten Flüssigkeit aus der zweiten Öffnung im Wesentlichen dichtend, insbesondere vollständig dichtend, zu verschließen.

Gemäß einer weiteren Ausführungsform ist ein weiteres Verbindungselement zum Ausbilden einer entlang einer zu der zweiten Öffnung senkrechten Achse beidseitig formschlüssigen Verbindung zwischen dem zweiten Deckel und dem zweiten Behälter vorgesehen. Dabei ist die Verbindung insbesondere auch senkrecht zu der besagten Achse formschlüssig.

Gemäß einer weiteren Ausführungsform weist der zweite Deckel als Verbindungselement wenigstens einen Vorsprung, insbesondere einen Stift, auf und der zweite Behälter weist, insbesondere an der zweiten Öffnung, wenigstens einen Einschnitt, insbesondere eine Bohrung, auf, wobei zum Ausbilden der formschlüssigen Verbindung zwischen dem zweiten Deckel und dem zweiten Behälter ein jeweiliger Vorsprung des zweiten Deckels in einen entsprechenden Einschnitt des zweiten Behälters einsetzbar ist.

Gemäß einer weiteren Ausführungsform weist der zweite Deckel wenigstens einen Einschnitt, insbesondere eine Bohrung, auf und der zweite Behälter weist, insbesondere an der zweiten Öffnung, als Verbindungselement wenigstens einen Vorsprung, insbesondere einen Stift, auf, wobei zum Ausbilden der formschlüssigen Verbindung zwischen dem zweiten Deckel und dem zweiten Behälter ein jeweiliger Vorsprung des zweiten Behälters in einen entsprechenden Einschnitt des zweiten Deckels einsetzbar ist.

Durch die formschlüssigen Verbindungen zwischen den Deckeln und den Öffnungen der Behälter sowie zwischen den Ausgussöffnungen und den Verschlüssen ist die Sicherung des erfindungsgemäßen Systems gegen ein Umkippen und Auslaufen von Flüssigkeit, insbesondere beim Servieren weiter verbessert.

Insbesondere betrifft diese Erfindung einen aus der Wasserkanne, dem optionalen Wasserkannendeckel, der Teekanne und dem Teekannendeckel bestehenden Teekocher, dessen einzelne Bauteile mit einem System aus Stiften und Bohrungen in der Art miteinander verbunden sind, so dass Unfälle jeder Art mit diesem Teekocher ausgeschlossen sind. Das besagte Verbindungssystem gewährleistet im aktivierten Zustand insbesondere, dass die Bauteile selbst dann fest miteinander verbunden bleiben, wenn man den Teekocher auch kopfüber, also mit der Teekanne nach unten aufstellt. Bei diesen Teekochern handelt es sich um Kannen, die während ihrer Benutzung heiße Flüssigkeiten beinhalten (Tee, Kräutertee, kochendes Wasser u. ä.). Teekocher werden für Teeaufguss, für Vorbereitung von Kräuterteen, und zum Wasserkochen angewandt, die zu Hause, in den Kaffeehäusern, Restaurants, Teehäusern oder ähnlichen Lebensbereichen zum Einsatz kommen und per Hand serviert werden. Nach dem Servieren werden die Teekocher im Allgemeinen auf den Tischen, Beistelltischen, Arbeitsflächen, Herden u. ä. bis zum nächsten Service bereitgestellt. Die Unfälle mit den Teekochern ereignen sich im Allgemeinen während des Tragens, der Bedienung und der Bereitstellung. Heiße Flüssigkeiten, die während des Tragens wegen des Wackelns oder Herunterfallens der Kannen; wegen Herunterfallens der Deckel während des Servierens oder wegen Umkippen während der Wartephase austreten, verursachen bei den Bedienern und den in unmittelbarer Nähe stehenden Personen ernsthafte physische Schäden (Brandwunden bzw. Verbrühungen am Körper).

Der traditionelle türkische Teekocher (Caydanlik) besteht aus zwei Kannen; nämlich aus einer Wasserkanne und einer Teekanne, die beim Servieren aufeinander gestellt und zusammen getragen werden. Das Wackeln beim Tragen und Servieren bringt die Kannen aus dem Gleichgewicht und verursacht die Abtrennung der Kannen. Die heiße Flüssigkeit wird gefährlich herumgestreut. Außerdem ist es genauso gefährlich, wenn der Deckel der Teekanne und der innere Deckel der Wasserkanne während des Servierens sich lösen. Zur Überwindung dieses Problems werden nach der aktuell uns bekannten Technik die Deckel mit punktförmigen Vorsprüngen versehen. Somit plant man, dass die Deckel an den Kannen Teekanne, Wasserkanne) haften. Dieses Verfahren, das nur bei den Deckeln Anwendung findet, sorgt nur dafür, dass der Deckel nicht leicht herunterfällt, aber sorgt nicht dafür, dass der Deckel und die Kanne sich verschließen. Das besagte Verfahren verhindert bei Teekocher-Unfällen das Herumstreuen des heißen Wassers.

Diese Erfindung, die insbesondere mit einem System aus Stiften und Bohrungen den aus der Wasserkanne, dem optionalen Wasserkannendeckel, der Teekanne und dem Teekannendeckel bestehenden Teekocher und dessen einzelne Bauteile in der Art miteinander verbindet, so dass Unfälle jeder Art mit diesem Teekocher ausgeschlossen sind, betrifft und gewährleistet im aktivierten Zustand mit diesem Verbindungssystem, dass die Bauteile selbst dann fest miteinander verbunden bleiben, wenn man den Teekocher auch kopfüber, also mit der Teekanne nach unten aufstellt. Sie bietet für alle genannten Nachteile eine Gesamtlösung.

Die Besonderheit dieser Erfindung besteht insbesondere darin, dass alle Segmente des Teekochers insbesondere mit Stift- und Bohrungssystem miteinander verbunden und verschlossen sind und somit der Teekannendeckel mit der Teekanne, der optionale innere Deckel mit der Wasserkanne und die Teekanne mit der Wasserkanne verschlossen und fixiert werden können. Im aktivierten Zustand wird mit diesem Verbindungssystem gewährleistet, dass die Segmente neben den Unfällen wie Umkippen, Herunterfallen, Wackeln u. ä., selbst dann fest miteinander verbunden bleiben, wenn man den Teekocher auch kopfüber, also mit der Teekanne nach unten aufstellt.

Somit wird insbesondere verhindert, dass heiße Flüssigkeit herumgestreut wird; durch das vollständige Verschlusssystem die einzelnen Segmente des Teekochers (horizontal und vertikal) fixiert sind, der Teekocher (Teekanne auf Wasserkanne aufgestellt) mit Leichtigkeit getragen werden kann; wegen des Verschlusssystems auch im Falle eines Umkippens und der Schieflage des Teekochers keine heiße Flüssigkeit aus der Verbindungsstelle der beiden Segmente austritt; das Verschlusssystem aus Stiften und Bohrungen die Maße und das Gewicht des Teekochers keineswegs erhöhen; das System keinen Einfluss auf die Produktionskosten hat; der Verschluss und die Trennung des Systems sowohl mit der rechten als auch mit der linken Hand mit Leichtigkeit durchgeführt werden kann; Die Beschaffenheit dieses Teekochers ist stabil, seine Anwendung ist leicht und sicher, er ist wirtschaftlich und ergonomisch.

Alle Segmente dieses Teekochers mit Verschlusssystem sind insbesondere mit jeweils einem sich gegenüber stehenden Stift und/oder einer Bohrung versehen.

Die Kanäle bzw. Bohrungen sind insbesondere in T-Form idealisiert bzw. realisiert, damit die Stifte leicht einrasten und verschließen. Das eine Ende des T-Kanals ist offen, damit der Stift angebracht wird, und die beiden anderen Enden sind zu, damit der Stift einrastet und der Verschlussvorgang realisiert wird. Somit wird dafür gesorgt, dass alle Segmente des Teekochers vertikal und horizontal verschlossen sind.

Zum Beispiel befindet sich der Bohrung an dem Teekannendeckel gegenüber an der Teekannentülle ein Stift. Der Bohrung am Teekannenboden gegenüber befindet sich ein Stift an der Wasserkannentülle. Insbesondere kann der Stift an dem Kannenkörper eine Länge haben, so dass er sowohl die Bohrung am inneren Deckel als auch die Bohrung an der Teekanne durchquert und festhält. Somit kann sowohl der innere Deckel als auch die Teekanne zusammen mit der Wasserkanne verschlossen werden.

Beispiel für den Verschlussvorgang ist wie folgt: Wenn die Teekanne mit der Wasserkanne fixiert wird, wird mindestens ein Stift an der Tülle der Wasserkanne von dem offenen Ende des Kanals mindestens in die eine T-Bohrung am Boden der Teekanne eingesetzt. Anschließend wird die Teekanne leicht in Richtung einer der beiden geschlossenen Enden der T-Bohrung gedreht und somit verschlossen (fixiert).

Der Stift, der von dem offenen Ende des T-Kanals eingesetzt wird, sitzt an einem der geschlossen Enden des T-Kanals fest. Der anschließende Drehvorgang sorgt dafür, dass der Stift an einem der geschlossen Enden des T-Kanals festrastet. Sobald der Stift eines der geschlossenen Enden des T-Kanals erreicht hat, wird der Schließvorgang abgeschlossen. Sobald alle Segmente miteinander verschlossen sind, wird die vollständige Fixierung erreicht. Somit bleiben alle Segmente fest miteinander verbunden, wenn man den Teekocher auch kopfüber, also mit der Teekanne nach unten aufstellt. Wenn man die Teekanne leicht in die entgegengesetzte Richtung bewegt, gleitet der Kanal über den Stift und sorgt dafür, dass der Stift freikommt. Sobald der Stift einen der beiden Enden des T-Kanals erreicht hat, wird die Teekanne vertikal hochgehoben und der Stift kommt aus dem offenen Ende des T-Kanals hervor.

Da die Deckel und Kannenöffnungen insbesondere ringförmig sind und der Verschlussvorgang durch Rotationsbewegung verwirklicht wird, können Stifte und Bohrungen in beliebiger Anzahl und Ordnung eingesetzt werden. Je nachdem, wie man die Stifte und Bohrungen einsetzt, verändert sich die Verschlussrichtung.

Wie oben beschrieben können alle Segmente des Teekochers mit Verschlusssystem (Teekannendeckel, Teekanne, optionaler Teedeckel und Wasserkanne) aufeinander gestellt fixiert werden. Dabei wird insbesondere Teekannendeckel mit der Teekannenöffnung, der innere Deckel mit der Wasserkanne und die Teekanne mit der Wasserkanne verschlossen und fixiert.

Weiterhin betrifft die vorliegende Erfindung insbesondere durch die folgenden Gegenstände, die auch in Anspruchsform formuliert werden können:
Gegenstand 1: Teekocher, dessen einzelne Bauteile mit einem System aus Stiften und Bohrungen in der Art miteinander verbunden sind, dass Unfälle jeder Art mit diesem Teekocher ausgeschlossen sind und im aktivierten Zustand die Bauteile selbst dann fest miteinander verbunden bleiben, wenn man den Teekocher auch kopfüber aufstellt und wenn die Teekanne und die Deckel dieses Teekochers verschließbar sind, wobei der Teekocher die folgenden Komponenten aufweist: eine Wasserkanne, die an der Tülle mindestens einen Stift und/oder eine Bohrung hat, eine Teekanne, die nur am Kannenboden mindestens eine Bohrung und/oder mindestens einen Stift oder nur an der Tülle mindestens einen Stift und/oder eine Bohrung oder am Boden und an der Tülle mindestens einen Stift und/oder eine Bohrung hat, einen Teekocherdeckel mit mindestens einer Bohrung und/oder mindestens einen Stift hat, und wobei der Teekocher ein Verschlusssystem aus Stiften und Bohrungen aufweist, das dafür sorgt, dass der Teekannendeckel mit der Teekanne und die Teekanne mit der Wasserkanne verschlossen und befestigt sind.
Gegenstand 2: Teekocher nach Gegenstand 1, wobei die Kanne einen optionalen Innendeckel hat, der mindestens mit einer Bohrung und/ oder mindestens mit einem Stift versehen ist.
Gegenstand 3: Teekocher nach Gegenstand 1 oder 2, wobei die Kanne mit einem Stift oder mehreren Stiften versehen ist, der/ die, die erforderliche Länge hat/haben und durch die Bohrungen an der Tülle der Wasserkanne, an dem inneren Deckel durchgeht/durchgehen und die Bohrung am Boden der Teekanne festhält/festhalten, wobei die Verschlussrichtung je nach Einsetzen der Stifte und Bohrungen den Präferenzen des Bedieners entsprechend (linkshändig/rechtshändig) optional verändert werden kann.

Weitere Beispiele Ausführungsformen der Erfindung ergeben sich aus den Zeichnungen, welche im Folgenden beschrieben sind.

Dabei zeigt
- Fig. 1: eine perspektivische Darstellung eines erfindungsgemäßen Systems zum Zubereiten von Tee;
- Fig. 2: eine Detailansicht eines Einschnitts zum Einsetzen eines Vorsprungs zwecks Verbinden des ersten und zweiten Behälters des erfindungsgemäßen Systems.

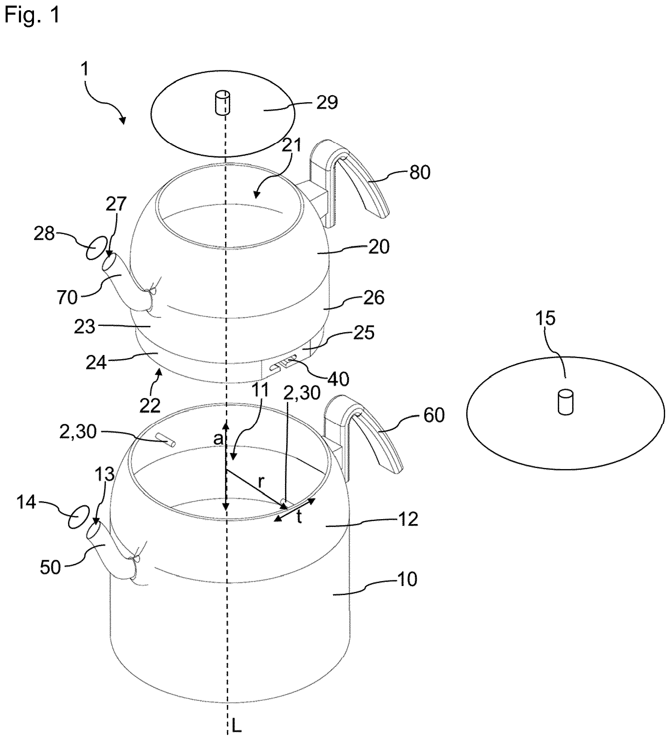

Fig. 1 zeigt eine perspektivische Darstellung eine erfindungsgemäßen Systems 1, insbesondere eines Teekochers, zum Zubereiten von Tee, welches einen ersten Behälter 10 zum Aufnehmen einer ersten Flüssigkeit, insbesondere Wasser, und einen zweiten Behälter 20 zum Aufnehmen einer zweiten Flüssigkeit, insbesondere Teekonzentrat, umfasst.

Mittels des zweiten Behälters 20 kann z.B. ein Teekonzentrat zubereitet werden. Dabei werden z.B. Teeblätter in einem Beutel in dem zweiten Behälter 20 platziert und mit heißem Wasser übergossen, so dass durch Ziehenlassen das Teekonzentrat gebildet wird. In dem ersten Behälter 10 kann z.B. auf einem Herd Wasser erhitzt, insbesondere zum Kochen gebracht, werden. Dann kann der zweite Behälter 20 zum Servieren des Teekochers auf dem ersten Behälter 10 platziert werden, so dass der erste Behälter 10 und der zweite Behälter 20 entlang der gemeinsamen in Fig. 1 gezeigten Längsachse L angeordnet sind. Anschließend kann z.B. Teekonzentrat aus dem zweiten Behälter 20 eingeschenkt und mit heißem Wasser aus dem ersten Behälter 10 verdünnt werden.

Der erste Behälter 10 weist eine Wandung 12 auf, die einen Innenraum zur Aufnahme der ersten Flüssigkeit umgibt. Der erste Behälter 10 weist in dem in Fig. 1 gezeigten Beispiel einen kreisförmigen Querschnitt bezüglich der Längsachse L auf, ist also im Wesentlichen kreiszylinderförmig ausgebildet. Die erste Behälter 10 kann jedoch auch eine beliebige andere Form aufweisen.

Der erste Behälter 10 weist weiterhin stirnseitig bezüglich der Längsachse L eine erste Öffnung 11 zum Einfüllen der ersten Flüssigkeit auf, wobei insbesondere die erste Öffnung 11 in einer zu der Längsachse L senkrechten Ebene erstreckt ist, und wobei insbesondere die erste Öffnung 11 einen kreisförmigen Querschnitt aufweist.

Der in Fig. 1 gezeigte erste Behälter 10 verjüngt sich entlang der Längsachse L zu der ersten Öffnung 11 hin, das heißt die Querschnittsfläche an der ersten Öffnung 11 ist geringer als die Querschnittsfläche des ersten Behälters 10 an einem unteren Ende des ersten Behälters 10. Eine derartige Verjüngung ist jedoch optional.

An einer inneren Seite der Wandung 12 sind als Verbindungselemente 2 zwei in einer radialen Richtung r (senkrecht zu der Längsachse L bzw. zu einer axialen Richtung a, die parallel zu der Längsachse L verläuft) in den Innenraum des ersten Behälters 10 hereinragende Vorsprünge 30, z.B. Stifte, angeordnet. In der hier gezeigten Ausführungsform sind die Vorsprünge 30 gegenüberliegend, das heißt in einem Winkel von 180° zueinander angeordnet. Es sind natürlich auch andere Anordnungen möglich. Ferner ist die Anzahl der Vorsprünge 30 nicht auf zwei begrenzt.

Weiterhin weist der erste Behälter 10 einen mechanisch mit der Wandung 12 verbundenen ersten Griff 60 zum Halten des ersten Behälters 10 und eine erste Tülle 50 zum Ausgießen der ersten Flüssigkeit aus dem ersten Behälter 10 auf. Die erste Tülle 50 ist dabei derart mit dem Innenraum des ersten Behälters 10 verbunden, dass die erste Flüssigkeit durch eine erste Ausgussöffnung 13 aus dem ersten Behälter 10 gegossen werden kann. Dabei ist die erste Ausgussöffnung 13 nicht zwangsläufig an einer Tülle angeordnet. Alternativ kann z.B. auch die Wandung 12 die erste Ausgussöffnung 13 aufweisen.

Ferner sind in Fig. 1 ein erster Verschluss 14 zum Verschließen, insbesondere Abdichten, der ersten Ausgussöffnung 13 und ein erster Deckel 15 zum Verschließen, insbesondere Abdichten, der ersten Öffnung 11, gezeigt.

Der zweite Behälter 20 weist einen von einer Wandung umschlossenen Innenraum zur Aufnahme einer zweiten Flüssigkeit und eine zweite Öffnung 21 zum Einfüllen der zweiten Flüssigkeit in den Innenraum auf. Wie der erste Behälter 10 weist der hier gezeigte zweite Behälter 20 einen kreisförmigen Querschnitt bezüglich der Längsachse L auf und verjüngt sich entlang der Längsachse L in Richtung der zweiten Öffnung 21.

Entlang der Längsachse L weist der zweite Behälter 20 einen Behälterabschnitt 23, der den Innenraum des zweiten Behälters 20 zur Aufnahme der zweiten Flüssigkeit bildet, sowie einen an einem unteren Ende 22 des zweiten Behälters 20 angeordneten Verbindungsabschnitt 24 auf, wobei der Verbindungsabschnitt 24 dazu eingerichtet bzw. ausgebildet ist, in die erste Öffnung 11 des ersten Behälters 10 eingesetzt zu werden.

Dabei weist der Verbindungsabschnitt 24 senkrecht zu der Längsachse L einen im Wesentlichen kreisförmigen Querschnitt mit einer Abflachung 25 auf, wobei der Verbindungsabschnitt 24 an der Abflachung 25 einen Einschnitt 40 zum Einsetzen eines entsprechenden Vorsprungs 30 des ersten Behälters 10 aufweist. Durch die Abflachung 25 ist hier eine ebene Fläche am Umfang des Verbindungsabschnitts 24 gebildet, die in einer tangentialen Richtung t bezüglich der Längsachse erstreckt ist.

Weiterhin weist der zweite Behälter 20 einen zweiten Griff 80 zum Halten des zweiten Behälters 20 und eine zweite Tülle 70 zum Ausgießen der zweiten Flüssigkeit aus dem zweiten Behälter 20 auf. Die zweite Tülle 70 ist dabei derart mit dem Innenraum des zweiten Behälters 20 verbunden, dass die zweite Flüssigkeit durch eine zweite Ausgussöffnung 27 aus dem zweiten Behälter 20 gegossen werden kann. Dabei ist die zweite Ausgussöffnung 27 nicht zwangsläufig an einer Tülle angeordnet, sondernd kann z.B. auch direkt an einer Wandung des zweiten Behälters 20 angeordnet sein.

Außerdem sind in Fig. 1 ein zweiter Verschluss 28 zum Verschließen, insbesondere Abdichten, der zweiten Ausgussöffnung 27 und ein zweiter Deckel 29 zum Verschließen, insbesondere Abdichten, der zweiten Öffnung 21, gezeigt.

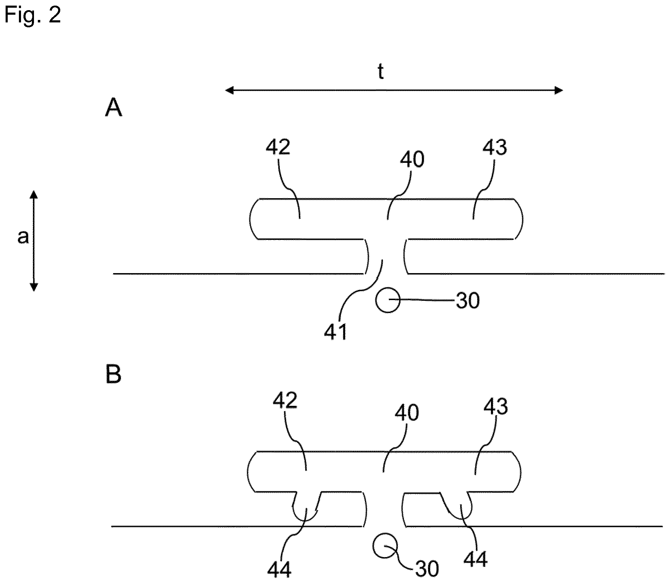

Im Folgenden wird anhand der Übersichtsdarstellung der Fig. 1 und der Detaildarstellung der Fig. 2 ein Verbindungsmechanismus zwischen dem ersten Behälter 10 und dem zweiten Behälter 20 beschrieben.

Der Verbindungsabschnitt 24 des zweiten Behälters 20 weist an der Abflachung 25 einen in radialer Richtung r erstreckten Einschnitt 40 zum Einsetzen eines Vorsprungs 30 des ersten Behälters 10 auf.

Fig. 2A zeigt eine Darstellung des Einschnitts 40 im Querschnitt bezüglich der radialen Richtung r. Aus Fig. 2A ist ersichtlich, dass der Einschnitt 40 einen in axialer Richtung a erstreckten ersten Abschnitt 41 sowie einen von dem ersten Abschnitt 41 in tangentialer Richtung t abzweigenden zweiten Abschnitt 42 und einen von dem ersten Abschnitt 41 in tangentialer Richtung t abzweigenden dritten Abschnitt 43 aufweist. Mit anderen Worten: der Einschnitt 40 ist im Querschnitt bezüglich der radialen Richtung r T-förmig ausgebildet.

Wenn der erste Behälter 10 und der zweite Behälter 20 wie in Fig. 1 gezeigt entlang der Längsachse L angeordnet und miteinander verbunden werden, wird der Verbindungsabschnitt 24 des zweiten Behälters in die erste Öffnung 11 des ersten Behälters 10 eingesetzt. Dabei wird der Vorsprung 30 des ersten Behälters 10 in der axialen Richtung a in den ersten Abschnitt 41 des Einschnitts 40 des zweiten Behälters 20 eingesetzt. Anschließend wird zum Ausbilden der Verbindung der zweite Behälter 20 in Bezug auf den ersten Behälter 10 um die Längsachse L gedreht (wobei der erste Behälter 10 und der zweite Behälter 20 z.B. an den Griffen 60,80 gehalten werden). Dadurch wird der entsprechende Vorsprung 30 je nach Drehrichtung in den zweiten Abschnitt 42 oder den dritten Abschnitt 43 des Einschnitts 40 eingesetzt. Durch Drehen in die jeweils entgegengesetzte Richtung und Bewegung in der axialen Richtung a kann der Vorsprung 30 zum Trennen des ersten Behälters 10 und des zweiten Behälters 20 wieder über den ersten Abschnitt 41 bewegt und durch eine axiale Bewegung aus dem Einschnitt 40 entfernt werden.

Die Positionen der Vorsprünge 30 an dem ersten Behälter 10 entsprechen insbesondere den Positionen der Einschnitte 40 an dem zweiten Behälter 20. Z.B. weist in dem hier gezeigten Beispiel, in dem der erste Behälter 10 zwei gegenüberliegende Vorsprünge 30 aufweist, der zweite Behälter 20 ebenfalls zwei gegenüberliegende Einschnitte 40 auf, wobei in der Fig. 1 lediglich ein Einschnitt 40 dargestellt ist. Beim Verbinden des ersten Behälters 10 und des zweiten Behälters 20 werden insbesondere beide Vorsprünge 30 gleichzeitig in einen jeweiligen Einschnitt 40 des zweiten Behälters 20 eingesetzt.

Fig. 2B zeigt eine Ausführungsform, in welcher der Einschnitt 40 vierte Abschnitte 44 aufweist, die von dem zweiten Abschnitt 42 und/oder dem dritten Abschnitt 43 abzweigen. Die vierten Abschnitte 44 sind insbesondere im Wesentlichen entlang der axialen Richtung a erstreckt. Wenn der Vorsprung 30 sich in dem zweiten Abschnitt 42 bzw. dritten Abschnitt 43 befindet, kann der Vorsprung 30 durch Einsetzen in den vierten Abschnitt 44 arretiert bzw. verrastet werden, so dass eine Drehbewegung des ersten Behälters 10 gegen den zweiten Behälter 20 um die Längsachse L behindert ist. Durch Bewegen des zweiten Behälters 20 in axialer Richtung a nach unten kann der Vorsprung 30 wieder aus dem vierten Abschnitt 44 in den zweiten Abschnitt 42 oder dritten Abschnitt 43 bewegt werden, um anschließend durch eine Drehbewegung den Vorsprung über den ersten Abschnitt 41 zu bewegen, so dass der Vorsprung 30 durch den ersten Abschnitt 41 aus dem Einschnitt 40 entfernt werden kann.

Charakteristisch für diesen Teekocher, bei dem insbesondere der zweite Deckel 29 (auch als Teekannendeckel bezeichnet) mit dem zweiten Behälter 20 (auch als Teekanne bezeichnet), der optionale erste Deckel 15 (auch als Innendeckel bezeichnet) mit dem ersten Behälter 10 (auch als Wasserkanne bezeichnet) und der zweite Behälter 20 (auch als Teekanne bezeichnet) mit dem ersten Behälter 10 bzw. die Wasserkanne mittels des Verschlusssystems mit Stiften und Bohrungen fest miteinander verbunden werden, sind insbesondere folgende Komponenten: erster Behälter 10 bzw. Wasserkanne mit mindestens einem Vorsprung 30, insbesondere mindestens einem Stift, und/oder mindestens einem Einschnitt 40, insbesondere mindestens einer Bohrung; optional einsetzbarer erster Deckel 15 bzw. Innendeckel für den erste Behälter 10 bzw. die Wasserkanne mit mindestens einem Einschnitt 40, insbesondere mindestens einer Bohrung und/oder mindestens einem Vorsprung 30, insbesondere mindestens einem Stift; zweiter Behälter 20 bzw. Teekanne mit mindestens einem Vorsprung 30, insbesondere mindestens einem Stift und/oder mindestens einem Einschnitt 40, insbesondere mindestens einer Bohrung, nur im Bodenbereich; zweiter Behälter 20 bzw. Teekanne mit mindestens einem Vorsprung 30, insbesondere mindestens einem Stift und/oder mindestens einem Einschnitt 40, insbesondere mindestens einer Bohrung, nur im Deckelbereich; zweiter Behälter 20 bzw. Teekanne mit mindestens einem Vorsprung 30, insbesondere mindestens einem Stift, und/oder mindestens einem Einschnitt 40, insbesondere mindestens einer Bohrung, sowohl im Boden- als auch im Deckelbereich; Zweiter Deckel 29 bzw. Teekannendeckel mit mindestens einem Vorsprung 30, insbesondere mindestens einem Stift, und/oder mindestens einem Einschnitt 40, insbesondere mindestens einer Bohrung, miteinander.

Die Anwendung dieser Erfindung ist insbesondere wie folgt:

Bei dieser Erfindung werden insbesondere alle einzelnen Bauteile (Segmente) mit einem System mit Vorsprüngen 30, insbesondere Stiften, und Einschnitten 40, insbesondere Bohrungen, miteinander verschlossen.

Vorsprünge 30, insbesondere Stifte, und/oder Einschnitte 40, insbesondere Bohrungen, sind insbesondere bei jedem Segment des Teekochers vorhanden. Dadurch werden insbesondere alle Segmente des traditionellen türkischen Teekochers erster Behälter 10 bzw. Wasserkanne, zweiter Behälter 20 bzw. Teekanne, zweiter Deckel 29 bzw. Teekannendeckel, insbesondere mit bzw. in der gewöhnlichen Reihenfolge, aufeinander gestellt und fixiert.

Ferner kann der erste Deckel 15 bzw. der innere Deckel mit Vorsprüngen 30, insbesondere Stiften, und Einschnitten 40, insbesondere Bohrungen, mit der ersten Tülle 50 des ersten Behälters 10 bzw. der Wasserkanne mit diesem Verschlusssystem fixiert werden und somit Unfällen vorbeugen, für den Fall, wenn bzw. dass der zweite Behälter 20 bzw. die Teekanne, hochgehoben wird, dabei aus dem ersten Behälter 10 bzw. der Wasserkanne unkontrolliert Dampf austritt und die Hand des Benutzers beschädigt.

Der Erfindung liegt insbesondere zugrunde, dass der Einschnitt 40, insbesondere die T-Bohrung, an dem zweiten Deckel 29 bzw. Teekannendeckel in dem Vorsprung 30, insbesondere dem Stift, an der zweiten Tülle 70 des zweiten Behälters 20 bzw. der Teekanne einrastet (bzw. dass der Vorsprung 30 in einem entsprechenden Einschnitt 40 der zweiten Tülle 70 einrastet), wenn der zweite Deckel 29 bzw. der Teekannendeckel an der zweiten Tülle 70 des zweiten Behälters 20 bzw. der Teekanne eingesetzt wird.

Der Vorsprung 30, insbesondere der Stift, wird durch das offene Ende des Einschnitts 40, insbesondere der T-Bohrung, in den Einschnitt 40, insbesondere die Bohrung, eingesetzt und setzt sich an einem der geschlossenen Enden des Einschnitts 40, insbesondere der T-Bohrung, fest.

Anschließend wird der erste Deckel 15 bzw. der innere Deckel in die Verschlussrichtung gedreht (horizontale Rotationsbewegung), insbesondere damit der Vorsprung 30, insbesondere der Stift, (sich) an einem der geschlossenen Enden der Aussparung 40, insbesondere der T-Bohrung, festsitzt. Somit wird der erste Deckel 15 bzw. der innere Deckel mit bzw. an dem ersten Behälter 10 bzw. der Wasserkanne befestigt.

Wenn zum Beispiel der zweite Behälter 20 bzw. die Teekanne auf den ersten Behälter 10 bzw. die Wasserkanne gesetzt wird, rastet sich bzw. rastet der Einschnitt 40, insbesondere die T-Bohrung, am Boden des zweiten Behälters 20 bzw. der Teekanne in den Vorsprung 30, insbesondere den Stift, an dem ersten Behälter 10 bzw. der Wasserkanne ein (bzw. der Vorsprung 30 rastet in den Einschnitt 40 ein).

Der Vorsprung 30, insbesondere der Stift, wird insbesondere durch das offene Ende des Einschnitts 40, insbesondere der T-Bohrung, in den Einschnitt 40, insbesondere die Bohrung, eingesetzt und bleibt an einem der geschlossenen Enden des Einschnitts 40, insbesondere der T-Bohrung, fest.

Anschließend wird der zweite Behälter 20 bzw. die Teekanne in die Verschlussrichtung gedreht (horizontale Rotationsbewegung), damit der Vorsprung 30, insbesondere der Stift, an einem der geschlossenen Enden der T-Bohrung festsitzt. Dadurch wird der zweite Behälter 20 bzw. die Teekanne mit bzw. an dem ersten Behälter 10 bzw. der Wasserkanne befestigt.

Die Einschnitte 40, insbesondere die Kanäle, werden insbesondere in T-Form idealisiert bzw. realisiert, damit (sich) die Vorsprünge 30, insbesondere die Stifte, mit Leichtigkeit einrasten und das System sich schließt. Das eine Ende des Einschnitts 40, insbesondere der T-Bohrung, ist insbesondere frei, damit der Vorsprung 30, insbesondere der Stift, eingesetzt wird und die beiden anderen Enden sind insbesondere geschlossen, damit der Vorsprung 30, insbesondere der Stift, festrastet und der Verschluss realisiert wird.

**Bezugszeichenliste**

| | |
|---|---|
| System zum Zubereiten von Tee | 1 |
| Verbindungselement | 2 |
| Erster Behälter | 10 |
| Erste Öffnung | 11 |
| Wandung | 12 |
| Erste Ausgussöffnung | 13 |
| Erster Verschluss | 14 |
| Erster Deckel | 15 |
| Zweiter Behälter | 20 |
| Zweite Öffnung | 21 |
| Unteres Ende | 22 |
| Behälterabschnitt | 23 |
| Verbindungsabschnitt | 24 |
| Abflachung | 25 |
| Außenfläche | 26 |
| Zweite Ausgussöffnung | 27 |
| Zweiter Verschluss | 28 |
| Zweiter Deckel | 29 |
| Vorsprung | 30 |
| Einschnitt | 40 |
| Erster Abschnitt | 41 |
| Zweiter Abschnitt | 42 |
| Dritter Abschnitt | 43 |
| Vierter Abschnitt | 44 |
| Erste Tülle | 50 |
| Erster Griff | 60 |
| Zweite Tülle | 70 |
| Zweiter Griff | 80 |
| Längsachse | L |
| Axiale Richtung | a |
| Radiale Richtung | r |
| Tangentiale Richtung | t |

## Patentansprüche

1. System (1) zum Zubereiten von Tee aufweisend
- einen ersten Behälter (10) zur Aufnahme einer ersten Flüssigkeit, wobei der erste Behälter (10) eine erste Öffnung (11) zum Einfüllen der ersten Flüssigkeit aufweist, und
- einen zweiten Behälter (20) zur Aufnahme einer zweiten Flüssigkeit, wobei der zweite Behälter (20) eine zweite Öffnung (21) zum Einfüllen der zweiten Flüssigkeit und ein der zweiten Öffnung (21) gegenüberliegendes unteres Ende (22) aufweist,
- wobei der erste Behälter (10) und der zweite Behälter (20) derart entlang einer gemeinsamen Längsachse (L) positionierbar sind, dass das untere Ende (22) des zweiten Behälters (20) die erste Öffnung (11) des ersten Behälters (10) verschließt,
**dadurch gekennzeichnet,**
**dass** das System (1) wenigstens ein Verbindungselement (2) aufweist, das dazu ausgebildet ist, zwischen dem ersten Behälter (10) und dem zweiten Behälter (20) eine entlang der Längsachse (L) beidseitig formschlüssige Verbindung auszubilden.

2. System (1) nach Anspruch 1, **dadurch gekennzeichnet, dass** die Verbindung zwischen dem ersten Behälter (10) und dem zweiten Behälter (20) auch senkrecht zu der Längsachse (L) formschlüssig ist.

3. System (1) nach Anspruch 1 oder 2, **dadurch gekennzeichnet, dass** das untere Ende (22) des zweiten Behälters (20) vollständig geschlossen ist.

4. System (1) nach einem der vorhergehenden Ansprüche, **dadurch gekennzeichnet, dass** das untere Ende (22) des zweiten Behälters (20) in die erste Öffnung (11) des ersten Behälters (10) einsetzbar ist, so dass die erste Öffnung (11) verschlossen ist.

5. System (1) nach einem der vorhergehenden Ansprüche, **dadurch gekennzeichnet, dass** die erste Öffnung (11) von einer umlaufenden Wandung (12) des ersten Behälters (10) begrenzt ist, wobei der zweite Behälter (20) eine umlaufende Außenfläche (26) aufweist, die derart in die erste Öffnung (11) einsetzbar ist, dass die Außenfläche (26) formschlüssig an der Wandung (12) anliegt.

6. System nach einem der vorhergehenden Ansprüche, **dadurch gekennzeichnet, dass** das untere Ende (22) im Querschnitt bezüglich der Längsachse (L) eine Kreisform mit wenigstens einer Abflachung (25) aufweist.

7. System (1) nach einem der Ansprüche 1 bis 6, **dadurch gekennzeichnet, dass** das wenigstens eine Verbindungselement (2) durch einen Vorsprung (30) des ersten Behälters (10) gebildet ist, wobei der zweite Behälter (20) wenigstens einen Einschnitt (40) aufweist, und wobei zum Ausbilden der formschlüssigen Verbindung zwischen dem ersten Behälter (10) und dem zweiten Behälter (20) ein jeweiliger Vorsprung (30) des ersten Behälters (10) in einen entsprechenden Einschnitt (40) des zweiten Behälters (20) einsetzbar ist.

8. System (1) nach einem der Ansprüche 1 bis 6, **dadurch gekennzeichnet, dass** das wenigstens eine Verbindungselement (2) durch einen Vorsprung (30) des zweiten Behälters (20) gebildet ist, wobei der erste Behälter (10) wenigstens einen Einschnitt (40) aufweist, und wobei zum Ausbilden der formschlüssigen Verbindung zwischen dem ersten Behälter (10) und dem zweiten Behälter (20) ein jeweiliger Vorsprung (30) des zweiten Behälters (20) in einen entsprechenden Einschnitt (40) des ersten Behälters (10) einsetzbar ist.

9. System (1) nach Anspruch 7 oder 8, **dadurch gekennzeichnet, dass** der wenigstens eine Vorsprung (30) in einer radialen Richtung (r) bezüglich der Längsachse (L) erstreckt ist, wobei der wenigstens eine Einschnitt (40) einen in einer axialen Richtung (a) bezüglich der Längsachse (L) verlaufenden ersten Abschnitt (41) und einen in einer tangentialen Richtung (t) bezüglich der Längsachse (L) verlaufenden zweiten Abschnitt (42) aufweist, wobei ein jeweiliger Vorsprung (30) mittels einer translatorischen Bewegung in der axialen Richtung (a) in den ersten Abschnitt (41) eines entsprechenden Einschnitts (40) einsetzbar ist, und wobei der jeweilige Vorsprung (30) mittels einer Drehbewegung zwischen dem ersten Behälter (10) und dem zweiten Behälter (20) um die Längsachse (L) in den zweiten Abschnitt (42) des entsprechenden Einschnitts (40) einsetzbar ist.

10. System (1) nach Anspruch 9, **dadurch gekennzeichnet, dass** der Einschnitt (40) weiterhin einen in der tangentialen Richtung (t) bezüglich der Längsachse (L) verlaufenden dritten Abschnitt (43) aufweist, wobei der jeweilige Vorsprung (30) mittels einer Drehbewegung zwischen dem ersten Behälter (10) und dem zweiten Behälter (20) in einer ersten Richtung um die Längsachse (L) in den zweiten Abschnitt (42) einsetzbar ist, und wobei der jeweilige Vorsprung (30) mittels einer Drehbewegung zwischen dem ersten Behälter (10) und dem zweiten Behälter (20) in einer der ersten Richtung entgegengesetzten zweiten Richtung um die Längsachse (L) in den dritten Abschnitt (43) einsetzbar ist.

11. System (1) nach einem der Ansprüche 7 bis 10, **dadurch gekennzeichnet, dass** der jeweilige Vorsprung (30) in dem entsprechenden Einschnitt (40), insbesondere in dem zweiten Abschnitt (42) und/oder in dem dritten Abschnitt (43) des entsprechenden Einschnitts (40), verrastbar ist.

12. System (1) nach Anspruch 11, **dadurch gekennzeichnet, dass** der wenigstens eine Einschnitt (40) einen in der axialen Richtung (a) erstreckten vierten Abschnitt (44) aufweist, wobei der vierte Abschnitt (44) von dem zweiten Abschnitt (42) oder dem dritten Abschnitt (43) abzweigt, so dass der jeweilige Vorsprung (30) zum Verrasten des Vorsprungs (30) von dem zweiten Abschnitt (42) oder dem dritten Abschnitt (43) in den vierten Abschnitt (44) einsetzbar ist.

13. System (1) nach einem der vorhergehenden Ansprüche, **dadurch gekennzeichnet, dass** der erste Behälter (10) eine erste Ausgussöffnung (13) zum Ausgießen der ersten Flüssigkeit aus dem ersten Behälter (10) aufweist, wobei das System (1) einen ersten Verschluss (14) aufweist, der dazu ausgebildet ist, die erste Ausgussöffnung (13) zu verschließen.

14. System (1) nach einem der vorhergehenden Ansprüche, **dadurch gekennzeichnet, dass** der zweite Behälter (20) eine zweite Ausgussöffnung (27) zum Ausgießen der zweiten Flüssigkeit aus dem zweiten Behälter (20) aufweist, wobei das System (1) einen zweiten Verschluss (28) aufweist, der dazu ausgebildet ist, die zweite Ausgussöffnung (27) zu verschließen.

15. System (1) nach einem der vorhergehenden Ansprüche, **dadurch gekennzeichnet, dass** das System (1) einen ersten Deckel (15) zum Verschließen der ersten Öffnung (11) und/oder einen zweiten Deckel (29) zum Verschließen der zweiten Öffnung (21) aufweist.
